# EUROPEAN PATENT APPLICATION

(11) **EP 3 981 565 A1**
(43) Date of publication of application: **13.04.2022**
(21) Application number: 21210688.4
(22) Date of filing: 03.10.2019
(51) Int. Cl.: B28B 7/36

(54) **CONCRETE DECORATING AND EMBOSSING DEVICE**

(30) Priority: 04.10.2018 JP 2018189306; 18.04.2019 JP 2019079452
(62) Divisional of application: 19868928.3
(71) Applicant: Toppan Printing Co., Ltd., Tokyo 110-0016 (JP)
(72) Inventor: MIURA, Kimihiro, Tokyo, 110-0016 (JP)
(74) Representative: TBK

(57) **Abstract**

A concrete decorating embossing material (1) is provided. The concrete decorating embossing material (1) comprises a substrate (2) including a reverse structure (4) which is a reverse of an uneven pattern to be formed on a concrete surface, and cure retardant layer elements (3) which are formed in portions of the surface of the substrate (2) on which the reverse structure (4) is formed, and comprise a resin composition mixed with a concrete cure retardant. The concrete decorating embossing material (1) includes a texture pattern of the cure retardant layer elements (3) on the substrate (2).

## Description

### [Technical Field]

The present invention relates to concrete decorating casting paper and concrete decorating embossing materials.

### [Background Art]

There has been proposed concrete decorating casting paper including a film sheet, as a substrate, having portions where cure retardant layer elements containing a resin composition mixed with a concrete cure retardant are formed to provide a texture pattern on the film sheet (e.g., refer to PTL 1). The concrete decorating casting paper described in PTL 1 is adhered to the inner surface of a concrete casting frame so that portions of the surface of the cast concrete remain uncured due to the presence of the cure retardant layer elements to thereby transfer the texture pattern as a design on the concrete surface. Furthermore, the concrete decorating casting paper described in PTL 1 is adhered to the inner surface of a concrete casting frame so that portions of the surface of the concrete cast into the frame remain uncured due to the presence of the cure retardant layer elements, followed by washing off the uncured concrete to form a texture pattern via the aggregates exposed on the concrete surface as a design.

### [Citation List]

### [Patent Literature]

[PTL 1] JP 2002-537141

### [Summary of the Invention]

### [Technical Problem]

However, the concrete decorating casting paper described in PTL 1 could produce voids between the concrete and the film sheet, and thus could produce voids or color unevenness on the concrete surface.

Furthermore, with the concrete decorating casting paper of PTL 1, it has been difficult to form an uneven pattern on the concrete surface, and accordingly it has been difficult to improve aesthetic appearance with the uneven pattern.

The present invention has been accomplished in view of the above issues and aims to provide concrete decorating casting paper that can improve the finish of a concrete surface, and a concrete decorating embossing material that can easily impart a texture pattern via the aggregates exposed from the concrete and an uneven pattern, to the concrete surface.

### [Solution to Problem]

To solve the above issues, an aspect of the present invention provides concrete decorating casting paper which includes a substrate sheet, and cure retardant layer elements which are formed in portions of a first surface of the substrate sheet, and contains a resin composition mixed with a concrete cure retardant. In the concrete decorating casting paper, the first surface of the substrate sheet has a wettability of 34 mN/m or more.

To solve the above issues, an aspect of the present invention provides a concrete decorating embossing material which includes a substrate including a reverse structure which is the reverse of an uneven pattern to be formed on a concrete surface, and cure retardant layer elements which are formed in portions of the surface of the substrate on which the reverse structure is formed, and comprise a resin composition mixed with a concrete cure retardant. The concrete decorating embossing material includes a texture pattern of the cure retardant layer elements on the substrate.

### [Advantageous Effects of the Invention]

According to the present invention, the affinity of concrete for a substrate sheet can be improved. This can facilitate separation of voids between the substrate sheet and the concrete, and make the cement paste uniform. Thus, there can be provided concrete decorating casting paper that can minimize formation of voids and occurrence of color unevenness on the concrete surface, and improve the finish of the concrete surface.

According to the present invention, a texture pattern can be formed on a concrete surface via the aggregates exposed due to the presence of the cure retardant layer elements. Furthermore, an uneven pattern can be formed on a concrete surface via the reverse structure formed on the substrate. Consequently, there can be provided a concrete decorating embossing material that can easily impart a texture pattern via the aggregates exposed from the concrete and an uneven pattern to the concrete surface.

### [Brief Description of the Drawings]

Fig. 1 is a cross-sectional view illustrating concrete decorating casting paper according to a first embodiment of the present invention.
Fig. 2 is a cross-sectional view illustrating concrete decorating casting paper according to a second embodiment of the present invention.
Fig. 3 is a cross-sectional view illustrating concrete decorating casting paper according to a third embodiment of the present invention.
Fig. 4 is a plan view illustrating the concrete decorating casting paper according to the third embodiment of the present invention.
Fig. 5 is a set of a diagrams each illustrating an example of precast concrete formed by using the concrete decorating casting paper according to the third embodiment of the present invention, in which (a) is a cross-sectional view in the case of casting paper having no first cure retardant layer elements, and (b) is a cross-sectional view in the case of casting paper having first cure retardant layer elements.
Fig. 6 is a cross-sectional view illustrating a concrete decorating embossing material according to a fourth embodiment of the present invention.

### [Description of the Embodiments]

Concrete decorating casting paper and concrete decorating embossing materials according to an embodiment of the present invention will be described with reference to the drawings. The present invention should not be limited to the following embodiments, but modifications, such as design changes, may be made based on the knowledge of those skilled in the art. Such modifications should also be encompassed by the scope of the present invention. Also, the drawings are exaggerated as appropriate for ease of understanding.

### (First Embodiment)

### (Configuration)

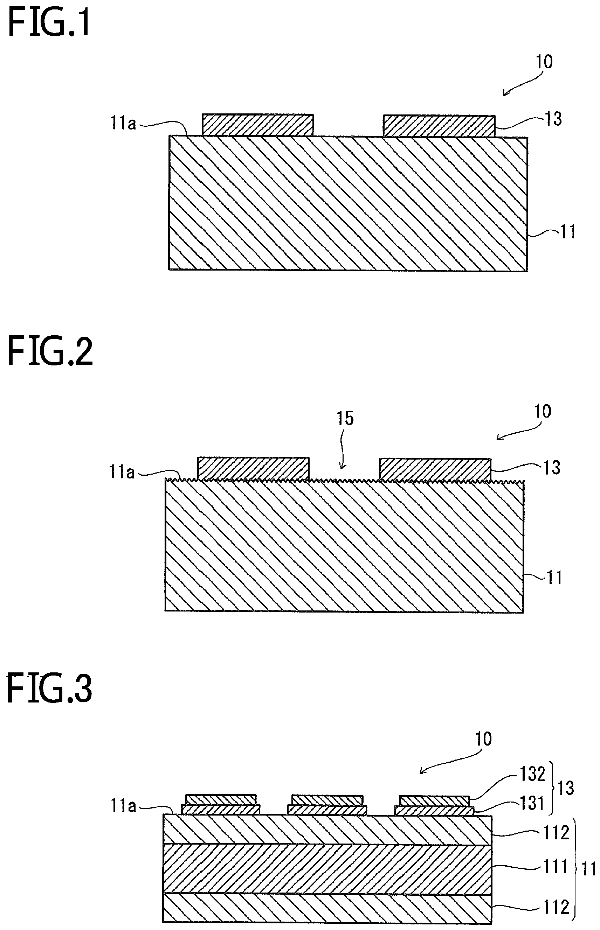

Fig. 1 shows concrete decorating casting paper 10 according to a first embodiment of the present invention, including a substrate sheet 11, and cure retardant layer elements 13 which are formed in portions of a surface 11a of the substrate sheet 11 to form a texture pattern on the substrate sheet 11. The concrete decorating casting paper 10 according to the first embodiment of the present invention is adhered to the inner surface of a concrete casting frame, so that portions of the surface of the cast concrete remain uncured due to the presence of the cure retardant layer elements 13 to thereby transfer the design of the texture pattern on the concrete surface.

### (Substrate sheet)

The substrate sheet 11 serves as a substrate. The substrate sheet 11 is formed of a film sheet and double-sided laminated kraft paper. The film sheet may be made of a thermoplastic resin. The thermoplastic resin may be formed into a sheet by T-die molding. There is no particular limitation on the thermoplastic resin, but the thermoplastic resin may be similar to those used for film sheets (substrates) in conventional concrete decorating casting paper. Examples of the thermoplastic resin may include polyolefin resins such as polyethylene, polypropylene, polymethylpentene, polybutene, ethylene-propylene copolymer, ethylene-α-olefin copolymer, and propylene-α-olefin copolymer; polyolefin resins such as olefin-based copolymer resins such as ethylene-acetic acid vinyl copolymer, ethylene-vinyl alcohol copolymer, ethylene- (meth)acrylic acid(ester) copolymer, and metal neutralized product (ionomer) of an ethylene-unsaturated carboxylic acid copolymer; polyester resins such as polyethylene terephthalate, polybutylene terephthalate, polytetramethylene terephthalate, polyethylene naphthalate, a polyethylene terephthalate-isophthalate copolymer, 1,4-cyclohexanedimethanol copolymerized polyethylene terephthalate, polyarylate, and polycarbonate; acrylic resins such as poly(meth)acrylonitrile, polymethyl(meth)acrylate, polyethyl(meth)acrylate, polybutyl(meth)acrylate, and polyacrylamide; polyamide resins such as nylon-6, nylon-6,6, and nylon-6,10; styrene resins such as polystyrene, AS resin, and ABS resin; vinyl resins, such as polyvinyl chloride, polyvinyl acetate, polyvinyl alcohol, polyvinyl acetal, and polyvinyl butyral; fluororesins such as polyvinyl fluoride, polyvinylidene fluoride, polytetrafluoroethylene, an ethylene-tetrafluoroethylene copolymer, and an ethylene-perfluoroalkylvinylether copolymer; and a mixture, a copolymer, a complex, and a laminate of two or more of these materials.

While many thermoplastic resins are mentioned above as the thermoplastic resin that can be used as the film sheet, from the perspective of the increasing social concern over environmental problems in recent years, it is not preferred to use a thermoplastic resin containing chlorine (a halogen) such as a polyvinyl chloride resin, and it is preferred to use a halogen-free thermoplastic resin. In particular, from the perspective of physical properties, processability, versatility, cost-efficiency, and the like, a polyolefin resin and/or a polyester resin (amorphous or biaxially oriented) are most preferred to be used as the halogen-free thermoplastic resin.

The polyolefin resin may be selected from the various resins mentioned above, and in particular, a polypropylene resin, i.e., a homopolymer or a copolymer containing propylene as a main component is preferred. For example, a homopolypropylene resin, random polypropylene resin, block polypropylene resin, and the like may be used alone or appropriately mixed, and a resin in which atactic polypropylene is appropriately additionally mixed with these resins may be used. The polyolefin resin may be a copolymer containing an olefin comonomer other than propylene, e.g., a propylene-α-olefin copolymer or the like having a crystalline polypropylene portion and containing α-olefin, other than propylene, with 2 to 20 carbons, preferably containing one or more comonomers from among ethylene, butene-1, 4-methylpentene-1, hexene-1, and octene-1, at a ratio of 15 mol% or more. Also, the polyolefin resin may additionally contain a modifier, which is used for softening polypropylene resins, such as low-density polyethylene, an ethylene-α-olefin copolymer, ethylene-propylene copolymer rubber, ethylene-propylene-nonconjugated diene copolymer rubber, styrene-butadiene copolymer, or a hydrogenated product thereof. The film sheet is preferred to have a thickness in the range of about 100 µm to 250 µm.

As the double-sided laminated kraft paper, a paper substrate 111 may be used, as shown in Fig. 3, with polyolefin layers 112 laminated on both sides. There is no particular limitation on the paper substrate 111, but the paper substrate 111 may be similar to one used for double-sided laminated kraft paper (substrate) in the conventional concrete decorating casting paper. For example, a paper material such as high-quality paper, medium-quality paper, coated paper, art paper, kraft paper, and resin-impregnated paper, or various types of synthetic paper may be used. When kraft paper is used, the paper substrate 111 is preferred to have a thickness in the range of about 60 µm to 260 µm. As the polyolefin layers 112, a polyolefin resin, such as low-density polyethylene (LDPE), linear low-density polyethylene (LLDPE), high-density polyethylene (HDPE), or polypropylene may be used. The polyolefin layers 112 are each preferred to have a thickness in the range of about 10 µm to 40 µm. The double-sided laminated kraft paper is preferred to have a thickness in the range of about 100 µm to 300 µm.

The surface 11a of the substrate sheet 11, i.e., the surface on which the cure retardant layer elements 13 are formed, is preferred to have a wettability of 34 mN/m or more. In particular, from the perspective of adhesion between the cure retardant layer elements 13 and the substrate sheet 11, wettability is preferred to be 40 mN/m or more. That is, wettability is preferred to be 34 mN/m or more and less than 44 mN/m. From the perspective of color unevenness on the concrete surface, wettability is preferred to be 44 mN/m or more. From the perspective of peelability between the concrete and the concrete decorating casting paper 10, wettability is preferred to be 48 mN/m or more. From the perspective of avoiding voids on the concrete surface, wettability is preferred to be 54 mN/m or more. As a method of controlling wettability to 34 mN/m or more, a method of treating the concrete surface with corona discharge may be used, with a discharge of 20 W min/m² or more.

### (Cure retardant layer elements)

The cure retardant layer elements 13 are formed in portions of the surface 11a of the substrate sheet 11 so that the concrete surface remains uncured in these portions according to the design as designed. The cure retardant layer elements 13 as formed contain a resin composition mixed with a concrete cure retardant. Specifically, the cure retardant layer elements 13 are formed using a coating liquid which is obtained by dissolving or dispersing a concrete cure retardant containing an oxycarboxylic acid as a main component in an appropriate diluent solvent together with acrylic or rosin resin. The coating liquid may be applied, for example, using various printing methods, such as gravure printing, and silk screen printing. The oxycarboxylic acid may be, for example, lactic acid, malic acid, citric acid, or the like, or a mixture, copolymer, composite, laminate, or the like of two or more of these materials. The acrylic resin may be, for example, methyl acrylate, ethyl acrylate, or butyl acrylate, or a mixture, copolymer, composite, laminate, or the like of two or more of these materials. The cure retardant layer elements 13 are preferred to include diatomaceous earth or titanium oxide as an additive.

The diatomaceous earth is preferred to have a particle size, for example, of 10 µm or more and 100 µm or less. The cure retardant layer elements 13 are preferred to contain, for example, 10 mass% or more and 20 mass% or less oxycarboxylic acid, 25 mass% or more and 60 mass% or less acrylic resin, 10 mass% or more and 15 mass% or less diatomaceous earth, and 5 mass% or more and 10 mass% or less titanium oxide, relative to the total mass of the cure retardant layer elements 13.

Any pattern may be used as a texture pattern, including, for example, a wood grain pattern, stone grain pattern, fabric grain pattern, abstract pattern, geometric pattern, characters, and symbols, or a combination of two or more of these patterns. The cure retardant layer elements 13 are each preferred to have a thickness, for example, of 5 µm or more and 80 µm or less.

As described above, the concrete decorating casting paper 10 according to the first embodiment of the present invention includes the substrate sheet 11, and the cure retardant layer elements 13 which are formed in portions of the surface 11a of the substrate sheet 11 and contain a resin composition mixed with a concrete cure retardant. The surface 11a of the substrate sheet 11 has a wettability of 34 mN/m or more. Thus, the affinity of the concrete for the substrate sheet 11 can be improved. This can easily separate voids between the substrate sheet 11 and the concrete, and make the cement paste uniform. Thus, there is provided concrete decorating casting paper 10 that can minimize formation of voids and occurrence of color unevenness on the concrete surface, and can improve the finish of the concrete surface.

The concrete decorating casting paper 10 according to the first embodiment of the present invention is configured such that the substrate sheet 11 includes a polyolefin resin and/or a polyester resin. This is preferable from the perspective of not only environmental issues, but also issues of physical properties, processability, versatility, and cost-efficiency.

Furthermore, the concrete decorating casting paper 10 according to the first embodiment of the present invention includes a film sheet (substrate sheet 11) having a thickness of 100 µm or more and 250 µm or less. Thus, the substrate sheet 11 can be prevented from being torn, when separating the substrate sheet 11 from the concrete. Also, flexibility of the substrate sheet 11 can be secured, ensuring easy separation of the substrate sheet 11.

The concrete decorating casting paper 10 according to the first embodiment of the present invention is configured such that the cure retardant layer elements 13 contain oxycarboxylic acid, diatomaceous earth, titanium oxide, and acrylic or rosin resin. Use of a concrete cure retardant of an organic compound can enhance cure retardation effect, compared to a concrete cure retardant which is an inorganic compound.

### (Second Embodiment)

Concrete decorating casting paper 10 according to a second embodiment of the present invention will be described.

Fig. 2 shows concrete decorating casting paper 10 according to the second embodiment which is different from the first embodiment in that the surface 11a of the substrate sheet 11 is not only corona-treated, but also provided with an uneven pattern 15.

The uneven pattern 15 is preferred to have an arithmetic mean roughness of 1 µm or more and 30 µm or less. If the arithmetic mean roughness is less than 1 µm, adhesion between the substrate sheet 11 and the concrete may be high, so that when separating the substrate sheet 11 from the concrete, the concrete surface may also be separated, causing color unevenness on the concrete surface. If the arithmetic mean roughness is more than 30 µm, the concrete may permeate into the uneven pattern 15 of the substrate sheet 11, so that when separating the substrate sheet 11 from the concrete, the concrete surface may also be separated, causing color unevenness on the concrete surface. Portions of the substrate sheet 11 that have remained on the concrete surface without being separated may increase the unevenness and impair smoothness of the concrete surface.

The arithmetic mean roughness of the uneven pattern 15 is more preferred to be 1 µm or more and 20 µm or less. With this roughness, peelability of the substrate sheet 11 for the concrete may be improved and color unevenness of the concrete surface may be minimized. In particular, the arithmetic mean roughness is most preferred to be 1 µm or more and 10 µm or less. With this roughness, smoothness of the concrete surface may be improved. The uneven pattern 15 may be formed at least in portions of the surface 11a of the substrate sheet 11 where the cure retardant layer elements 13 are not provided. For example, the uneven pattern 15 may be formed across the surface 11a, or only in portions of the surface 11a where the cure retardant layer elements 13 are not provided.

As a method of forming the uneven pattern 15, for example, a method of embossing the substrate sheet 11 using an embossing roll immediately after being formed by T-die molding may be used.

As described above, the concrete decorating casting paper 10 according to the second embodiment of the present invention includes the uneven pattern 15 having an arithmetic mean roughness of 1 µm or more and 30 µm or less on the surface 11a of the substrate sheet 11. This can lower adhesion between the substrate sheet 11 and the concrete. Thus, when separating the substrate sheet 11 from the concrete, separation of the concrete surface may be minimized, and thus color unevenness of the concrete surface may be minimized.

### (Third Embodiment)

Concrete decorating casting paper 10 according to a third embodiment of the present invention will be described.

The concrete decorating casting paper 10 according to the third embodiment is different from the first embodiment in that, as shown in Fig. 3, the cure retardant layer elements 13 are laminates in each of which a plurality of layer elements such as a first cure retardant layer element 131 and a second cure retardant layer element 132 are laminated in this order on the surface 11a of the substrate sheet 11.

The first cure retardant layer elements 131 are formed in portions of the surface 11a of the substrate sheet 11. The second cure retardant layer elements 132 are formed on surfaces of the respective first cure retardant layer 131 facing away from the substrate sheet 11, and provide a greater cure retardation depth than the first cure retardant layer elements 131.

The first and second cure retardant layer elements 131 and 132 at least contain acrylic resin, oxycarboxylic acid, and diatomaceous earth materials. The acrylic resin retards curing of the concrete, while retaining oxycarboxylic acid, or the like serving as a cure retardant. Examples of the acrylic resin may include, but are not necessarily limited to, resins composed of (meth)acrylic acid esters such as methyl (meth)acrylate, ethyl (meth)acrylate, and butyl (meth)acrylate, and copolymers containing these materials.

The oxycarboxylic acid retards curing of the concrete. Examples of the oxycarboxylic acid may include, but are not necessarily limited to, aliphatic oxycarboxylic acids such as lactic acid, citric acid, gluconic acid, tartaric acid, hydracrylic acid, α-oxybutyric acid, glycolic acid, glyceric acid, tartronic acid, and malic acid; and aromatic oxycarboxylic acids such as salicylic acid, m-oxybenzoic acid, p-oxybenzoic acid, gallic acid, mandelic acid, and tropic acid. The diatomaceous earth retains oxycarboxylic acid and the like, and releases the same to the concrete. The diatomaceous earth is preferred to have a particle size in the range of about 10 µm to 100 µm.

The oxycarboxylic acid is added such that the mass ratio thereof in the first cure retardant layer elements 131 is less than the mass ratio thereof in the second cure retardant layer elements 132. Thus, the second cure retardant layer elements 132 with a greater amount of oxycarboxylic acid added exert a stronger cure retardation effect in the depth direction of the concrete, i.e., provide a greater cure retardation depth. However, at boundaries between concavities formed on the concrete surface and non-concavities, the concrete may be discolored due to diffusion of the cure retardant in the lateral direction.

In contrast, although the first cure retardant layer elements 131 with a smaller amount of oxycarboxylic acid added may provide only a small cure retardation depth, they can reduce discoloration of the concrete at the boundaries between the concavities and non-concavities. Since the first cure retardant layer elements 131 are provided over a greater area than the second cure retardant layer elements 132 are, the portions of the concrete where discoloration occurs, affected by the second cure retardant layer elements 132, remain uncured due to the presence of the first cure retardant layer elements 131 and the uncured concrete can be washed off.

The first cure retardant layer elements 131 are preferred to contain about 10 mass% to 20 mass% oxycarboxylic acid and 10 mass% to 25 mass% diatomaceous earth relative to 25 mass% to 60 mass% acrylic resin. The first cure retardant layer elements 131 are each preferred to have a thickness in the range of about 3 µm to 30 µm.

The second cure retardant layer elements 132 are preferred to contain about 15 mass% to 25 mass% oxycarboxylic acid and 10 mass% to 25 mass% diatomaceous earth with respect to 25 mass% to 60 mass% acrylic resin. The second cure retardant layer elements 132 are each preferred to have a thickness in the range of about 3 µ to 30 µm.

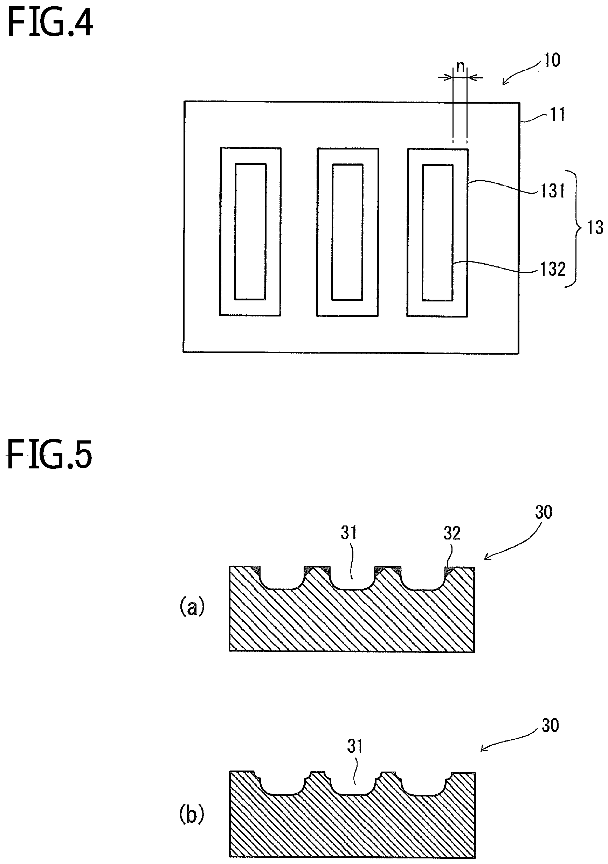

The first and second cure retardant layer elements 131 and 132 may be formed into any texture pattern such as a straight-line pattern, curved-line pattern, or grid pattern. As shown in Fig. 4, the first and second cure retardant layer elements 131 and 132 are preferred to have similar shapes. Preferably, a constant margin n may be provided between the contour of each first cure retardant layer element 131 and the contour of the corresponding second cure retardant layer element 132. The margin n is preferred to have a width of 1.5 mm or more.

Fig. 5(a) shows an example in which concavities 31 are formed in precast concrete 30 using concrete decorating casting paper not provided with the first cure retardant layer elements 131. As shown in Fig. 5 (a), using the concrete decorating casting paper not provided with the first cure retardant layer elements 131, discolored portions 32 are observed, impairing aesthetic appearance of the precast concrete 30.

In contrast, as shown in Fig. 5(b), since the concrete decorating casting paper 10 according to the third embodiment of the present invention includes the first cure retardant layer elements 131, discolored portions 32 are removed and become unnoticeable, and thus precast concrete 30 with high quality aesthetic appearance can be provided.

As described above, the concrete decorating casting paper 10 according to the third embodiment of the present invention includes the cure retardant layer elements 13 which are formed by laminating respective first cure retardant layer elements 131 and respective second cure retardant layer elements 132 in this order on the surface 11a of the substrate sheet 11. The second cure retardant layer elements 132 each provide a greater cure retardation depth and occupy a smaller area than the first cure retardant layer elements 131. Thus, when forming deep concavities 31 on the concrete surface, discoloration or the like can be reduced at the boundaries between the portions where the concavities 31 are formed and the portions where these are not formed. This may also prevent such defects as "formation of undesired protrusions". Consequently, precast concrete 30 with high quality aesthetic appearance can be produced.

### (Fourth Embodiment)

### (Configuration)

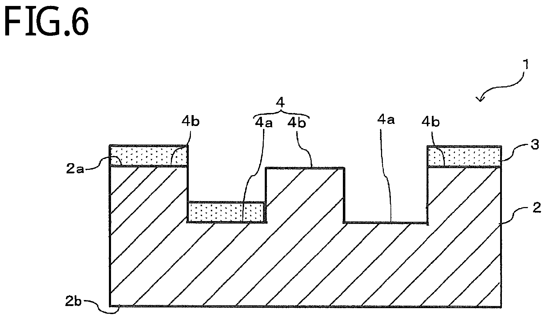

Fig. 6 shows a concrete decorating embossing material 1 according to a fourth embodiment of the present invention, including a substrate 2, and cure retardant layer elements 3 formed in portions of a surface 2a of the substrate 2.

### (Substrate)

The substrate 2 is a plate-like member and has the surface 2a where a reverse structure 4, which is the reverse of an uneven pattern to be formed on the concrete surface, is formed. The uneven pattern is transferred to the surface of concrete that has been cast in a frame to express a design on the concrete surface via the uneven pattern. The uneven pattern may be, for example, a tiled pattern, brick pattern, stonewall pattern, wood grain pattern, or stone grain pattern. The reverse structure 4 includes concavities 4a and convexities 4b. The difference in height between the bottom of each concavity 4a and the top of the convexity 4b adjacent to the concavity 4a is preferred to be, for example, 0.5 mm or more and 50 mm or less. The differences in height between portions of the substrate 2 may be changed continuously or discontinuously. If the differences in height between portions of the substrate 2 are changed continuously or discontinuously, a minimum difference in height between portions is preferred to be 0.5 mm or more, a maximum difference in height between portions is preferred to be 50 mm or less, and differences in height in other portions are preferred to be in the range of 0.5 mm to 50 mm. The substrate 2 may be, for example, silicon rubber, Styrofoam, urethane resin, or wood. The substrate 2 is preferred to have a thickness, for example, of 0.1 mm or more and 80 mm or less.

### (Cure retardant layer elements)

The cure retardant layer elements 3 are formed in portions of the surface 2a of the substrate 2 on which the reverse structure 4 is formed to form a texture pattern on the substrate 2. The cure retardant layer elements 3 cause portions of the surface of the concrete that has been cast in a frame to remain uncured to impart the texture pattern to the concrete surface via the aggregates (e.g., coarse aggregates, fine aggregates, etc.) exposed to the concrete surface. As a material for the cure retardant layer elements 3, for example, a resin composition mixed with a concrete cure retardant may be used. Such a resin composition can be formed using, for example, a coating liquid which is obtained by dissolving or dispersing a concrete cure retardant containing oxycarboxylic acid as a main component in an appropriate diluent solvent, together with acrylic or rosin resin. The coating liquid may be applied, for example, using various printing methods, such as gravure printing, and silk screen printing. The oxycarboxylic acid may be, for example, lactic acid, malic acid, citric acid, or the like, or a mixture, copolymer, composite, laminate, or the like of two or more of these materials. The acrylic resin may be, for example, methyl acrylate, ethyl acrylate, or butyl acrylate, or a mixture, copolymer, composite, laminate, or the like of two or more of these materials. The cure retardant layer elements 3 are preferred to contain diatomaceous earth or titanium oxide as an additive.

The diatomaceous earth is preferred to have a particle size, for example, of 10 µm or more and 100 µm or less. The cure retardant layer elements 3 are preferred to contain, for example, 10 mass% or more and 20 mass% or less oxycarboxylic acid, 25 mass% or more and 60 mass% or less acrylic resin, 10 mass% or more and 15 mass% or less diatomaceous earth, and 5 mass% or more and 10 mass% or less titanium oxide, relative to the total mass of the cure retardant layer elements 3.

The texture pattern may be, for example, a wood grain pattern, stone grain pattern, fabric grain pattern, abstract pattern, geometric pattern, or characters. The cure retardant layer elements 3 are each preferred to have a thickness, for example, of 5 µm or more and 80 µm or less.

The thicknesses of the cure retardant layer elements 3 may be changed continuously or discontinuously. If the thicknesses of the cure retardant layer elements 3 are changed continuously or discontinuously, a minimally thick layer element is preferred to have a thickness of 5 µm or more, a maximally thick layer element is preferred to have a thickness of 80 µm or less, and other layer elements are preferred to have thicknesses in the range of 5 µm to 80 µm. Furthermore, the thickness of the cure retardant layer elements 3 is preferred to be less than the difference in height between the bottom of each concavity 4a and the top of the convexity 4b adjacent to the concavity 4a configuring the reverse structure 4.

As described above, the cure retardant layer elements 3 that can be used in the concrete decorating embossing material 1 according to the fourth embodiment of the present invention may have the same configuration as the cure retardant layer elements 3 that can be used in the concrete decorating casting paper 10 according to the first embodiment of the present invention.

### (Usage)

As a method of using the decorating embossing material 1 according to the fourth embodiment of the present invention, for example, a method of adhering another surface 2b of the substrate 2 to the inner surface of a concrete casting frame may be used. Thus, portions of the surface of the concrete that has been cast in the frame can remain uncured due to the presence of the cure retardant layer elements 3, and the uncured concrete can be washed off to form the texture pattern on the concrete surface via the aggregates exposed thereto. Also, an uneven pattern can be formed on the concrete surface via the reverse structure 4 of the substrate 2.

### (Advantageous effects and others)

As described above, the concrete decorating embossing material 1 according to the fourth embodiment of the present invention includes the substrate 2 and the cure retardant layer elements 3. The substrate 2 includes the reverse structure 4 which is the reverse of an uneven pattern to be formed on the concrete surface. The cure retardant layer elements 3 are formed in portions of the surface 2a of the substrate 2 on which the reverse structure 4 is formed, and contain a resin composition mixed with a concrete cure retardant. Furthermore, in the concrete decorating embossing material 1, the cure retardant layer elements 3 form a texture pattern on the substrate 2. Thus, the texture pattern can be formed on the concrete surface via the aggregates exposed to the surface, due to the presence of the cure retardant layer elements 3. The reverse structure 4 formed on the substrate 2 can form an uneven pattern on the concrete surface. Consequently, there is provided a concrete decorating embossing material 1 which can easily form a texture pattern on the concrete surface via the aggregates exposed to the concrete surface and can also easily form an uneven pattern on the concrete surface.

In the concrete decorating embossing material 1 according to the fourth embodiment of the present invention, the reverse structure 4 is preferred to include the concavities 4a and the convexities 4b with a difference in height between the bottom of each concavity 4a and the top of the convexity 4b adjacent to the concavity 4a being 0.5 mm or more and 50 mm or less, and the cure retardant layer elements 3 are each preferred to have a thickness of 5 µm or more and 80 µm or less. Thus, good aesthetic appearance can be achieved with the texture pattern formed via the aggregates exposed from the concrete, and a good aesthetic appearance can also be achieved via the uneven pattern formed on the concrete surface.

In the concrete decorating embossing material 1 according to the fourth embodiment of the present invention, the cure retardant layer elements 3 are each preferred to have a thickness which is less than the difference in height between the bottom of each concavity 4a configuring the reverse structure 4 and the top of the convexity 4b adjacent to the concavity 4a. This may allow the texture pattern via the aggregates to be shallower, and the uneven pattern to be deeper, further improving aesthetic appearance.

In the concrete decorating embossing material 1 according to the fourth embodiment of the present invention, the cure retardant layer elements 3 are preferred to include oxycarboxylic acid, diatomaceous earth, titanium oxide, and acrylic or rosin resin. Use of a concrete cure retardant of an organic compound can enhance cure retardation effect, compared to the concrete cure retardant which is an inorganic compound.

In the concrete decorating embossing material 1 according to the fourth embodiment of the present invention, the substrate 2 is preferred to be made of silicon rubber, Styrofoam, a urethane resin, or wood. These materials are preferred from the perspective of not only environmental issues, but also issues of physical properties, processability, versatility, and cost-efficiency.

The configuration of the concrete decorating casting paper 10 according to the first to third embodiments of the present invention and the configuration of the concrete decorating embossing material 1 according to the fourth embodiment of the present invention may be combined as appropriate. For example, the uneven pattern 15 configuring the concrete decorating casting paper 10 according to the second embodiment of the present invention may be provided to the surface of the substrate 2 configuring the concrete decorating embossing material 1 according to the fourth embodiment of the present invention. Alternatively, for example, the substrate 2 configuring the concrete decorating embossing material 1 according to the fourth embodiment of the present invention may be replaced with the substrate sheet 11 configuring the concrete decorating casting paper 10 according to the third embodiment of the present invention. Furthermore, in the substrate 2 configuring the concrete decorating embossing material 1 according to the fourth embodiment of the present invention, wettability of the surface 2a where the reverse structure 4 is formed may be 34 mN/m or more, and arithmetic mean roughness of the surface 2a may be 1 µm or more and 30 µm or less. Alternatively, for example, the cure retardant layer elements 3 configuring the concrete decorating embossing material 1 according to the fourth embodiment of the present invention may be replaced with the cure retardant layer elements 13 configuring the concrete decorating casting paper 10 according to the third embodiment of the present invention.

### [Examples]

Examples and comparative examples of the concrete decorating casting paper 10 according to the first embodiment of the present invention will be described. The present invention should not be construed as being limited to the following examples.

### (Example 1)

Kraft paper with a polyolefin resin laminated on both sides was prepared as a substrate sheet 11. As the lamination method, a method of extruding a melted polyolefin resin from a slit die, a so-called T-die, into a film shape on both sides of the kraft paper was used. The substrate sheet 11 had a thickness of 250 µm. Subsequently, the surface 11a of the prepared substrate sheet 11 was subjected to corona discharge treatment with a discharge of 60 W min/m² to achieve a wettability of 54 mN/m across the surface 11a. Subsequently, a coating liquid for forming cure retardant layer elements 13 was applied to the surface 11a of the corona discharge-treated substrate sheet 11 by silk screen printing to form cure retardant layer elements 13 in portions of the surface 11a. The coating liquid used contained 10 mass% to 55 mass% oxycarboxylic acid (e.g., lactic acid, malic acid, citric acid, or gluconic acid), 35 mass% to 80 mass% rosin resin, and 5 mass% to 10 mass% titanium oxide relative to the total mass of the coating liquid. Concrete decorating casting paper 10 was prepared in this manner.

### (Example 2)

In Example 2, the surface 11a of the substrate sheet 11 was subjected to corona discharge treatment with a discharge of 50 W min/m² or more and less than 60 W min/m² to achieve a wettability of 48 mN/m or more and less than 54 mN/m across the surface 11a. Other than the above, concrete decorating casting paper 10 was prepared with the same material and procedure as in Example 1.

### (Example 3)

In Example 3, the surface 11a of the substrate sheet 11 was subjected to corona discharge treatment with a discharge amount of 40 W min/m² or more and less than 50 W min/m² to achieve a wettability of 44 mN/m or more and less than 48 mN/m across the surface 11a. Other than the above, concrete decorating casting paper 10 was prepared with the same material and procedure as in Example 1.

### (Example 4)

In Example 4, the surface 11a of the substrate sheet 11 was subjected to corona discharge treatment with a discharge of 30 W min/m² or more and less than 40 W min/m² to achieve a wettability of 40 mN/m or more and less than 44 mN/m across the surface 11a. Other than the above, concrete decorating casting paper 10 was prepared with the same material and procedure as in Example 1.

### (Example 5)

In Example 5, the surface 11a of the substrate sheet 11 was subjected to corona discharge treatment with a discharge of 20 W min/m² or more and less than 30 W min/m² to achieve a wettability of 34 mN/m or more and less than 40 mN/m across the surface 11a. Other than the above, concrete decorating casting paper 10 was prepared with the same material and procedure as in Example 1.

### (Comparative Example 1)

In Comparative Example 1, corona discharge treatment was not conducted. In this case, wettability across the surface 11a of the substrate sheet 11 was 30 mN/m or more and less than 34 mN/m. Other than the above, concrete decorating casting paper 10 was prepared with the same material and procedure as in Example 1.

### (Performance evaluation)

Designs were applied to concrete surfaces using the concrete decorating casting paper 10 of Examples 1 to 5 and Comparative Example 1, and performances of the casting paper were evaluated as follows in the design application process. In the process of applying designs to concrete surfaces, concrete decorating casting paper 10 was adhered, first, to the recesses of respective concrete casting frames (width 20 cm × depth 10 cm × height 5 cm) using an adhesive tape. Subsequently, 0.05 kg to 0.20 kg of water was added to 1 kg of a concrete material (25% to 40% coarse aggregates, 25% to 40% fine aggregates, and 10% to 30% Portland cement), followed by stirring with a medicine spoon or the like for 2 to 3 minutes. Subsequently, about 0.5 kg to 1.3 kg of the stirred concrete was cast into the concrete casting frames and was cured at room temperature for 24 hours. Thus, while the cast concrete was cured, portions of the recesses of the concrete were permitted to remain uncured.

Subsequently, the concrete was detached from the concrete casting frames. Subsequently, the concrete decorating casting paper 10 was separated from the detached concrete. Subsequently, the concrete was immersed in water and washed with a brush for two minutes to remove the uncured concrete in portions in the recesses (on the surface) of the concrete. Subsequently, the concrete from which the uncured concrete had been removed was dried at room temperature for 1 hour or more.

### (Evaluation of adhesion between retardant and substrate sheet 11)

When evaluating adhesion between the retardant and the substrate sheet 11, a cellophane tape (No. 252 manufactured by Sekisui Chemical Co., Ltd.) was adhered to the cure retardant layer elements 13 of the concrete decorating casting paper 10, and a load of 100 g/cm² was applied for 30 seconds. After that, the cellophane tape was peeled off to evaluate separation of the cure retardant layer elements 13. If there was separation, adhesion was evaluated to be excellent (acceptable), if there was minimal separation, adhesion was evaluated to be good (acceptable), and if separation occurred, adhesion was evaluated to be poor (unacceptable).

### (Evaluation for presence of voids on concrete surface)

When evaluating the presence of voids on the concrete surfaces, the concrete surfaces were observed from above, under indoor white light. If there were no voids, the concrete surface was evaluated to be excellent (acceptable), if there were only minimal voids, the concrete surface was evaluated to be good (acceptable), and if there were voids, the concrete surface was evaluated to be poor (unacceptable).

### (Evaluation for occurrence of color unevenness on concrete surface)

When evaluating the occurrence of color unevenness on the concrete surfaces, the concrete surfaces were observed from above, under indoor white light. If there was no color unevenness, the concrete surface was evaluated to be excellent (acceptable), if there was minimal color unevenness, the concrete surface was evaluated to be good (acceptable), and if there was color unevenness, the concrete surface was evaluated to be poor (unacceptable).

### (Evaluation for peelability between concrete and casting paper)

Peelability between concrete and concrete decorating casting paper 10 was evaluated in terms of whether the casting paper became caught when separated from the concrete. If the casting paper was separated without becoming caught, peelability was evaluated to be excellent (acceptable), if the level of the casting paper becoming caught was minimal, peelability was evaluated to be good (acceptable), and if the casting paper became caught to such an extent as to be torn, peelability was evaluated to be poor (unacceptable).

### (Evaluations)

Evaluations are shown in Table 1.

**[Table 1]**

| | Corona treatment condition [W min/m²] | Wettability [mN/m] | Adhesion between retardant and substrate | Voids on concrete surface | Color unevenness on concrete surface | Peelability between concrete and casting paper |
|---|---|---|---|---|---|---|
| Ex. 1 | 60 or more | 54 or more | Excellent | Excellent | Excellent | Excellent |
| Ex.2 | 50 or more and less than 60 | 48 or more and less than 54 | Excellent | Good | Excellent | Excellent |
| Ex.3 | 40 or more and less than 50 | 44 or more and less than 48 | Excellent | Good | Excellent | Good |
| Ex.4 | 30 or more and less than 40 | 40 or more and less than 44 | Excellent | Good | Good | Good |
| Ex.5 | 20 or more and less than 30 | 34 or more and less than 40 | Good | Good | Good | Good |
| Com. Ex.1 | Not corona treated | 30 or more and less than 34 | Good | Poor | Poor | Good |

As shown in Table 1, the concrete decorating casting paper 10 of Examples 1 to 5 was evaluated to be excellent or good (both acceptable) in terms of adhesion between retardant and the substrate sheet 11, voids on concrete surface, color unevenness on concrete surface, and peelability between concrete the casting paper. Specifically, the concrete decorating casting paper 10 of Example 5 was evaluated to be good (acceptable) in terms of all of adhesion between retardant and the substrate sheet 11, voids on concrete surface, color unevenness on concrete surface, and peelability between concrete and casting paper. The concrete decorating casting paper 10 of Example 4 was evaluated to be good (acceptable) in terms of voids on concrete surface, color unevenness on concrete surface, and peelability between concrete and casting paper, and to be excellent (acceptable) in terms of adhesion between retardant and the substrate sheet 11.

The concrete decorating casting paper 10 of Example 3 was evaluated to be good (acceptable) in terms of voids on concrete surface, and peelability between concrete and casting paper, and to be excellent (acceptable) in terms of adhesion between retardant and the substrate sheet 11, and color unevenness on concrete surface. The concrete decorating casting paper 10 of Example 2 was evaluated to be good (acceptable) in terms of voids on concrete surface, and to be excellent (acceptable) in terms of adhesion between retardant and the substrate sheet 11, color unevenness on concrete surface, and peelability between concrete and casting paper. The concrete decorating casting paper 10 of Example 1 was evaluated to be excellent (acceptable) in terms of all of adhesion between retardant and the substrate sheet 11, voids on concrete surface, color unevenness on concrete surface, and peelability between concrete and casting paper.

Accordingly, it was confirmed that the concrete decorating casting paper 10 of Examples 1 to 5 was better than the concrete decorating casting paper 10 of Comparative Example 1 in terms of adhesion between retardant and the substrate sheet 11, voids on concrete surface, color unevenness on concrete surface, and peelability between concrete and casting paper.

Examples and comparative examples of the concrete decorating casting paper 10 according to the second embodiment of the present invention will be described. The present invention should not be construed as being limited to the following examples.

### (Example 6)

First, a substrate sheet 11 was formed by T-die molding. As a material for the substrate sheet 11, a polyester resin was used. The substrate sheet 11 had a thickness of 200 µm. Subsequently, the substrate sheet 11 immediately after being formed was embossed using an embossing roll to form an uneven pattern 15 across the surface 11a of the substrate sheet 11. The outer circumferential surface of the embossing roll had an arithmetic mean roughness of 2 µm. Accordingly, the uneven pattern 15 on the surface 11a of the substrate sheet 11 had an arithmetic mean roughness of 2 µm. Subsequently, the surface 11a of the substrate sheet 11 was subjected to corona discharge treatment with a discharge of 20 W min/m² to achieve a wettability of 34 mN/m.

Subsequently, a coating liquid for cure retardant layer elements 13 was applied on the surface 11a of the substrate sheet 11 by silk screen printing to form cure retardant layer elements 13 in portions of the surface 11a. The coating liquid contained 30 mass% citric acid, 40 mass% methyl acrylate, 20 mass% diatomaceous earth, and 10 mass% titanium oxide relative to the total mass of the coating liquid. The cure retardant layer elements 13 each had a thickness of 45 µm. Concrete decorating casting paper 10 was prepared in this manner.

### (Example 7)

In Example 7, an embossing roll with an arithmetic mean roughness of 13 µm was used to obtain a substrate sheet 11 having an uneven pattern 15 with an arithmetic mean roughness of 13 µm. Other than the above, concrete decorating casting paper 10 was prepared with the same material and procedure as in Example 6.

### (Example 8)

In Example 8, an embossing roll with an arithmetic mean roughness of 25 µm was used to obtain a substrate sheet 11 having an uneven pattern 15 with an arithmetic mean roughness of 25 µm. Other than the above, concrete decorating casting paper 10 was prepared with the same material and procedure as in Example 6.

### (Comparative Example 2)

In Comparative Example 2, an embossing roll with an arithmetic mean roughness of 35 µm was used to obtain a substrate sheet 11 having an uneven pattern 15 with an arithmetic mean roughness of 35 µm. Other than the above, concrete decorating casting paper 10 was prepared with the same material and procedure as in Example 6.

### (Performance evaluation)

Designs were applied to concrete surfaces using the concrete decorating casting paper 10 of Examples 6 to 8 and Comparative Example 2, and performances of the casting paper were evaluated as follows in the design application process. In the process of applying designs to concrete surfaces, the concrete decorating casting paper 10 was adhered, first, to the recesses of respective concrete casting frames (width 20 cm × depth 10 cm × height 5 cm) using an adhesive tape. Subsequently, 0.05 to 0.20 kg of water was added to 1 kg of a concrete material (25 to 40% coarse aggregates, 25 to 40% fine aggregates, and 10 to 30% Portland cement), followed by stirring with a medicine spoon or the like for 2 to 3 minutes. Subsequently, about 0.5 kg to 1.3 kg of the stirred concrete was cast into the concrete casting frames and was cured at room temperature for 24 hours. Thus, while the cast concrete was cured, portions of the recesses of the concrete were permitted to remain uncured.

Subsequently, the concrete was detached from the concrete casting frames. Subsequently, the concrete decorating casting paper 10 was separated from the detached concrete. Subsequently, the concrete was immersed in water and washed with a brush for two minutes to remove the uncured concrete in portions in the recesses (on the surface) of the concrete. Subsequently, the concrete from which the uncured concrete had been removed was dried at room temperature for 1 hour or more.

### (Evaluation for peelability between concrete and casting paper)

Peelability between concrete and concrete decorating casting paper 10 was evaluated in terms of whether the casting paper became caught when separated from the concrete. If the casting paper was separated without becoming caught, peelability was evaluated to be excellent (acceptable), if the level of the casting paper becoming caught was minimal, peelability was evaluated to be good (acceptable), and if the casting paper became caught to such an extent as to be torn, peelability was evaluated to be poor (unacceptable).

### (Evaluation for occurrence of color unevenness on concrete surface)

When evaluating the occurrence of color unevenness on the concrete surfaces, the concrete surfaces were observed from above, under indoor white light. If there was no color unevenness, the concrete surface was evaluated to be excellent (acceptable), if there was minimal color unevenness, the concrete surface was evaluated to be good (acceptable), and if there was color unevenness, the concrete surface was evaluated to be poor (unacceptable).

### (Evaluation for smoothness of concrete surface)

When evaluating smoothness of the concrete surfaces, arithmetic mean roughness was measured as specified in Japanese Industrial Standard (JIS) B 0601. For measuring arithmetic mean roughness, a surface roughness meter (SJ-401 manufactured by Mitutoyo) was used. The surface roughness meter cutoff value was set to 10 µm or more and 100 µm or less, and the measurement length was set to 500 µm. If the value detected was less than 10 µm, smoothness was evaluated to be excellent (acceptable), if the value detected was 10 µm or more and 30 µm or less, smoothness was evaluated to be good (acceptable), and if the value detected was more than 30 µm, smoothness was evaluated to be poor (unacceptable).

### (Evaluations)

Evaluations are shown in Table 2.

**[Table 2]**

| | Peelability between concrete and casting paper | Color unevenness on concrete surface | Evaluation for smoothness of concrete surface |
|---|---|---|---|
| Example 6 | Excellent | Excellent | Excellent |
| Example 7 | Excellent | Excellent | Good |
| Example 8 | Good | Good | Good |
| Comparative Example 2 | Poor | Poor | Poor |

As shown in Table 2, the concrete decorating casting paper 10 of Examples 6 to 8, was evaluated to be excellent or good (both acceptable) in terms of peelability between concrete and casting paper, color unevenness on concrete surface, and smoothness of concrete surface. The concrete decorating casting paper 10 of Comparative Example 2 was evaluated to be poor (unacceptable) in terms of two or more of peelability between concrete and casting paper, color unevenness on concrete surface, and smoothness of concrete surface.

Specifically, the concrete decorating casting paper 10 of Comparative Example 2 was evaluated to be poor (unacceptable) in terms of peelability between concrete and the concrete decorating casting paper 10 because the arithmetic mean roughness of the uneven pattern 15 was high and thus the concrete permeated into the uneven pattern 15 of the substrate sheet 11. Also, color unevenness on concrete surface was evaluated to be poor because, when separating the substrate sheet 11 from the concrete, portions of the concrete also separated, and gloss of the portions where the concrete separated was reduced. Furthermore, smoothness of concrete surface was evaluated to be poor because the remaining portions also had large irregularities.

In contrast, the concrete decorating casting paper 10 of Examples 6 to 8 was evaluated to be excellent or good (both acceptable) in terms of peelability between concrete and casting paper because the arithmetic mean roughness of the uneven pattern 15 of the substrate sheet 11 was set to 1 µm or more and 30 µm or less to reduce adhesion between the substrate sheet 11 and the concrete. Also, color unevenness on concrete surface was evaluated to be excellent or good (both acceptable) because when separating the substrate sheet 11 from the concrete, separation of the concrete surface was minimized. Furthermore, smoothness of the concrete surface was evaluated to be excellent or good (both acceptable) because portions remained on the concrete surface without being separated had only small irregularities.

Accordingly, it was confirmed that the concrete decorating casting paper 10 of Examples 6 to 8 was better than the concrete decorating casting paper 10 of Comparative Example 2 in terms of peelability between concrete and casting paper, color unevenness on concrete surface, and smoothness of concrete surface.

Examples and comparative examples of the concrete decorating casting paper 10 according to the third embodiment of the present invention will be described. The present invention should not be construed as being limited to the following examples.

### (Example 9)

Kraft paper with polyethylene laminated on both sides was prepared as a substrate sheet 11. The kraft paper had a thickness of 180 µm. As a laminating method, a method of extruding melted polyethylene from a slit die, a so-called T-die, into a film shape on both sides of the kraft paper was used. The polyethylene had a thickness of 35 µm. Subsequently, the surface 11a of the prepared substrate sheet 11 was subjected to corona discharge treatment with a discharge of 20 W min/m² to achieve a wettability of 34 mN/m across the surface 11a.

Subsequently, a first cure retardant layer ink set forth below was printed by gravure printing in a pattern on the corona discharge-treated surface 11a of the substrate sheet 11, followed by drying in a drying oven heated to 80°C to 120°C for about 10 to 20 seconds to form first cure retardant layer elements 131 each having a thickness of 20 µm to 30 µm. Subsequently, a second cure retardant layer ink set forth below was printed by gravure printing in a pattern similar to the pattern of the first cure retardant layer elements 131, followed by drying similarly to form second cure retardant layer elements 132 each having a thickness of 20 µm to 30 µm. Concrete decorating casting paper 10 was prepared in this manner.

### <First cure retardant layer ink>

Acrylic resin ... 80 parts by mass
Oxycarboxylic acid ... 10 parts by mass
Diatomaceous earth ... 10 parts by mass

### <Second cure retardant layer ink>

Acrylic resin ... 65 parts by mass
Oxycarboxylic acid ... 20 parts by mass
Diatomaceous earth ... 15 parts by mass

### (Comparative Example 3)

In Comparative Example 3, the second cure retardant layer ink was used for first cure retardant layer elements 131, and the first cure retardant layer ink was used for second cure retardant layer elements 132. Other than the above, concrete decorating casting paper 10 was prepared with the same material and procedure as in Example 9.

### (Comparative Example 4)

In Comparative Example 4, printing size was the same between the first cure retardant layer elements 131 and the second cure retardant layer elements 132. Other than the above, concrete decorating casting paper 10 was prepared with the same material and procedure as in Example 9.

### (Comparative Example 5)

In Comparative Example 5, the first cure retardant layer elements 131 were omitted. Other than the above, concrete decorating casting paper 10 was prepared with the same material and procedure as in Example 9.

### (Comparative Example 6)

In Comparative Example 6, the second cure retardant layer elements 132 were omitted. Other than the above, concrete decorating casting paper 10 was prepared with the same material and procedure as in Example 9.

### (Performance evaluation)

### (Discoloration width at boundaries)

When evaluating discoloration width at boundaries, first, the concrete decorating casting paper 10 of Example 9 and Comparative Examples 3 to 6 were adhered to the recesses of respective concrete casting frames (width 10 cm × depth 10 cm × height 5 cm) using an adhesive tape. Subsequently, 1 part by mass of water was added to 8 parts by mass of concrete (60 mass% to 90 mass% silica and 15 mass% to 40 mass% Portland cement), followed by stirring with a medicine spoon for 2 to 3 minutes. Then, about 0.2 kg to 0.4 kg of the stirred concrete was cast into the concrete casting frames in which the decorating casting paper 10 was adhered, followed by curing for 24 hours, and then the concrete was detached from the concrete casting frames. Subsequently, the concrete that had been detached from the frames was immersed in water and washed with a brush for five minutes to remove the uncured concrete portions. A target value of the depth of concavities 31 after washing was about 2 mm to 5 mm. Discolored portions 32 at the boundaries between the portions of the concrete surfaces where the concavities 31 were formed and the portions where the concavities 31 were not formed were measured with a metal ruler. If the discolored portions 32 had a width of less than 1 mm, discoloration width was evaluated to be good (acceptable), and if the discolored portions 32 had a width of 1 mm or more, discoloration width was evaluated to be poor (unacceptable).

### (Evaluations)

Evaluations are shown in Table 3.

**[Table 3]**

| | Discoloration width at boundaries | | Remarks |
|---|---|---|---|
| | Measured value (mm) | Evaluation | |
| Example 9 | 0.4 to 0.8 | Good | |
| Comparative Example 3 | 1.5 to 2.5 | Poor | |
| Comparative Example 4 | 1.5 to 2.5 | Poor | |
| Comparative Example 5 | 1.5 to 2.5 | Poor | |
| Comparative Example 6 | 0.4 to 0.8 | Fair | Cure retardation depth was small, and targeted depth was not achieved in concavities. |

As shown in Table 3, in the concrete decorating casting paper 10 of Comparative Example 3, the first cure retardant layer elements 131 and the second cure retardant layer elements 132 were swapped, with respect to the concrete decorating casting paper 10 of Example 9. Thus, the layer elements using the second cure retardant layer ink for providing larger cure retardation depth were formed over a larger area. Thus, discoloration width at boundaries was evaluated to be poor (unacceptable) because discolored portions 32 of the concrete affected by the second cure retardant layer ink could not be removed. Furthermore, Comparative Example 3 revealed that forming layer elements of the first cure retardant layer ink on the second cure retardant layer ink did not affect the cure retardation depth.

In the concrete decorating casting paper 10 of Comparative Example 4, the first and second cure retardant layer elements 131 and 132 had the same size. Thus, the margin n shown in Fig. 4 was 0. Due to this, the discolored portions 32 of the concrete affected by the second cure retardant layer ink could not be removed, and thus discoloration width at the boundaries was evaluated to be poor (unacceptable).

Furthermore, in the concrete decorating casting paper 10 of Comparative Example 5, since the first cure retardant layer elements 131 were omitted, the pattern was formed with only the second cure retardant layer elements 132. Therefore, the discolored portions 32 of the concrete affected by the second cure retardant layer ink could not be removed as in Comparative Example 4, and thus discoloration width at the boundaries was evaluated to be poor (unacceptable).

In the concrete decorating casting paper 10 of Comparative Example 6, since the second cure retardant layer elements 132 were omitted, the pattern was formed with only the first cure retardant layer elements 131. Thus, the cure retardation depth was as shallow as 0.5 mm to 1.0 mm, and the depth of the obtained concavities was insufficient. However, patterning using the first cure retardant layer ink could reduce discoloration of the concrete. Consequently, although discoloration width at the boundaries was evaluated to be unacceptable, the evaluation was better than the concrete decorating casting paper 10 of Comparative Example 5, i.e., fair.

Accordingly, it was confirmed that the concrete decorating casting paper 10 of Example 9 could provide comparatively larger cure retardation depth than the concrete decorating casting paper 10 of Comparative Examples 3 to 7, could reduce discolored portions 32 of the concrete, and could provide precast concrete 30 with high aesthetic appearance.

Examples and comparative examples of the concrete decorating embossing material 1 according to the fourth embodiment of the present invention will be described. The present invention should not be construed as being limited to the following examples.

### [Example 10]

First, a plate-like member made of silicon rubber and having a surface 2a provided with a reverse structure 4 was prepared as a substrate 2. The substrate 2 had a thickness of 0.1 mm or more and 80 mm or less. The reverse structure 4 included concavities 4a and convexities 4b, with a difference in height between the bottom of each concavity 4a and the top of the convexity 4b adjacent to the concavity 4a being 0.5 mm or more and 50 mm or less. Specifically, among the differences in height between portions configuring the reverse structure 4, a minimum difference in height between portions was 0.5 mm, a maximum difference in height between portions was 50 mm, and differences in height in other portions were in the range of 0.5 mm to 50 mm.

Subsequently, a coating liquid for forming cure retardant layer elements 3 was applied to the surface 2a of the substrate 2 to form cure retardant layer elements 3 in portions of the surface 2a which form a texture pattern on the substrate 2. The cure retardant layer elements 3 each had a thickness of 5 µm or more and 80 µm or less. Specifically, among the thicknesses of the cure retardant layer elements 3, a minimally thick layer element had a thickness of 5 µm, a maximally thick layer element had a thickness of 80 µm, and other layer elements had thicknesses in the range of 5 µm to 80 µm.

The coating liquid was applied using a dispenser. The dispenser used had a discharge port diameter in the range of 50 µm to 600 µm, a discharge cycle in the range of 0.5 ms to 100 ms, a discharge per shot in the range of 0.5 µL to 1,000 µL, a gap with respect to the substrate 2 in the range of 0.5 mm to 40 mm, and a drive speed in the range of 10 mm/s to 200 mm/s. The coating liquid used contained 10 mass% to 55 mass% oxycarboxylic acid (e.g., lactic acid, malic acid, citric acid, or gluconic acid), 35 mass% to 80 mass% rosin resin, and 5 mass% to 10 mass% titanium oxide relative to the total mass of the coating liquid, and had a viscosity in the range of 10 CPS to 10,000 CPS. A concrete decorating embossing material 1 was prepared in this manner.

### [Example 11]

In Example 11, the reverse structure 4 included concavities 4a and convexities 4b, with a difference in height between the bottom of each concavity 4a and the top of the convexity 4b adjacent to the concavity 4a being 0.1 mm or more and 0.4 mm or less. Specifically, among the differences in height between portions configuring the reverse structure 4, a minimum difference in height between portions was 0.1 mm, a maximum difference in height between portions was 0.4 mm, and differences in height in other portions were in the range of 0.1 mm to 0.4 mm. Other than the above, a concrete decorating embossing material 1 was prepared with the same material and procedure as in Example 10.

### (Example 12)

In Example 12, the reverse structure 4 included concavities 4a and convexities 4b, with a difference in height between the bottom of each concavity 4a and the top of the convexity 4b adjacent to the concavity 4a being 51 mm or more and 80 mm. Specifically, among the differences in height between portions configuring the reverse structure 4, a minimum difference in height between portions was 51 mm, a maximum difference in height between portions was 80 mm, and differences in height in other portions were in the range of 51 mm to 80 mm. Other than the above, a concrete decorating embossing material 1 was prepared with the same material and procedure as in Example 10.

### (Example 13)

In Example 13, the cure retardant layer elements 3 each had a thickness of 1 µm or more and 4 µm or less. Specifically, among the thicknesses of the cure retardant layer elements 3, a minimally thick layer element had a thickness of 1 µm, a maximally thick layer element had a thickness of 4 µm, and other layer elements had thicknesses in the range of 1 µm to 4 µm. Other than the above, a concrete decorating embossing material 1 was prepared with the same material and procedure as in Example 10.

### (Example 14)

In Example 14, the cure retardant layer elements 3 each had a thickness of 81 µm or more and 160 µm or less. Specifically, among the thicknesses of the cure retardant layer elements 3, a minimally thick layer element had a thickness of 81 µm, a maximally thick layer element had a thickness of 160 µm, and other layer elements had thicknesses in the range of 81 µm to 160 µm. Other than the above, a concrete decorating embossing material 1 was prepared with the same material and procedure as in Example 10.

### (Example 15)

In Example 15, the cure retardant layer elements 3 each had a thickness of 50,000 µm (50 mm) or more and 80,000 µm (80 mm) or less. Specifically, among the thicknesses of the cure retardant layer elements 3, a minimally thick layer element had a thickness of 50 mm, a maximally thick layer element had a thickness of 80 mm, and other layer elements had thicknesses in the range of 50 mm to 80 mm. Other than the above, a concrete decorating embossing material 1 was prepared with the same material and procedure as in Example 10.

### (Comparative Example 7)

In Comparative Example 7, cure retardant layer elements 3 were omitted. That is, the cure retardant layer elements 3 each had a thickness of 0 µm. Other than the above, a concrete decorating embossing material 1 was prepared with the same material and procedure as in Example 10.

### (Comparative Example 8)

In Comparative Example 8, kraft paper on which a polyolefin resin was laminated was used as a substrate 2, omitting the reverse structure 4 of the substrate 2. That is, the difference in height between portions configuring the reverse structure 4 was 0 mm. Other than the above, a concrete decorating embossing material 1 was prepared with the same material and procedure as in Example 10.

### (Performance evaluation)

Designs were applied to concrete surfaces using the concrete decorating embossing materials 1 of Examples 10 to 15 and Comparative Examples 7 and 8, and performances were evaluated as follows in the design application process. In the process of applying designs to concrete surfaces, the concrete decorating embossing materials 1 were adhered, first, to the recesses of respective concrete casting frames (width 20 cm × depth 10 cm × height 5 cm) using an adhesive tape. Subsequently, 0.05 kg to 0.20 kg of water was added to 1 kg of a concrete material (25% to 40% coarse aggregates, 25% to 40% fine aggregates, and 10% to 30% Portland cement), followed by stirring with a medicine spoon or the like for 2 to 3 minutes. Subsequently, about 0.5 kg to 1.3 kg of the stirred concrete was cast into the concrete casting frames and was cured at room temperature for 24 hours. Thus, while the cast concrete was cured, portions of the recesses of the concrete were permitted to remain uncured.

Subsequently, the concrete was detached from the concrete casting frames. Subsequently, each concrete decorating embossing material 1 was separated from the detached concrete. Subsequently, the concrete was immersed in water and washed with a brush for two minutes to remove the uncured concrete in portions in the recesses (on the surface) of the concrete. Subsequently, the concrete from which the uncured concrete had been removed was dried at room temperature for 1 hour or more.

### (Evaluation for aesthetic appearance of texture pattern)

When evaluating the aesthetic appearance of a texture pattern, the aesthetic appearance of the texture pattern formed via the aggregates exposed from the concrete was visually observed and evaluated under indoor white light. If the aesthetic appearance was good, it was evaluated to be good (acceptable), if the aesthetic appearance was slightly defective but there was no problem in practical use, it was evaluated to be fair (acceptable), and if the aesthetic appearance was defective, it was evaluated to be poor (unacceptable).

### (Evaluation for aesthetic appearance of uneven pattern)

When evaluating the aesthetic appearance of an uneven pattern, the aesthetic appearance of an uneven pattern formed on each concrete surface was visually observed and evaluated under indoor white light. If the aesthetic appearance was good, it was evaluated to be good (acceptable), if the aesthetic appearance was slightly defective but there was no problem in practical use, it was evaluated to be fair (acceptable), and if the aesthetic appearance was defective, it was evaluated to be poor (unacceptable).

### (Evaluations)

Evaluations are shown in Table 4. In Table 4, "Difference in height between the bottom of each concavity 4a and the top of the convexity 4b adjacent to the concavity 4a configuring the reverse structure 4" is indicated as "Difference in height of reverse structure".

**[Table 4]**

| | Difference in height of reverse structure [mm] | Thickness of cure retardant layer element [µm] | Evaluation for aesthetic appearance of texture pattern | Evaluation for aesthetic appearance of uneven pattern |
|---|---|---|---|---|
| Example 10 | 0.5 or more and 50 or less | 5 or more and 80 or less | Good | Good |
| Example 11 | 0.1 or more and 0.4 or less | 5 or more and 80 or less | Good | Fair |
| Example 12 | 51 or more and 80 or less | 5 or more and 80 or less | Fair | Good |
| Example 13 | 0.5 or more and 50 or less | 1 or more and 4 or less | Fair | Good |
| Example 14 | 0.5 or more and 50 or less | 81 or more and 160 or less | Good | Fair |
| Example 15 | 0.5 or more and 50 or less | 50,000 or more and 80,000 or less | Fair | Fair |
| Comparative Example 7 | 0.5 or more and 50 or less | 0 | Poor | Good |
| Comparative Example 8 | 0 | 5 or more and 80 or less | Good | Poor |

As shown in Table 4, the concrete decorating embossing materials 1 of Examples 10 to 15 each formed a texture pattern on the concrete surface via the aggregates exposed due to the presence of the cure retardant layer elements 3, and formed an uneven pattern on the concrete surface via the reverse structure 4 of the substrate 2. Aesthetic appearances of the texture patterns and the uneven patterns were evaluated to be good or fair (both acceptable).

Specifically, the concrete decorating embossing material 1 of Example 10 was evaluated to be good (acceptable) in terms of aesthetic appearance of both texture and uneven patterns.

The concrete decorating embossing material 1 of Example 11 was evaluated to be good (acceptable) in terms of aesthetic appearance of texture pattern, but to be fair (acceptable) in terms of aesthetic appearance of uneven pattern because the difference in height of the reverse structure 4 was 0.1 mm or more and 0.4 mm or less, and thus the uneven pattern on the concrete surface became shallow. The concrete decorating embossing material 1 of Example 12 was evaluated to be good (acceptable) in terms of aesthetic appearance of uneven pattern, but to be fair (acceptable) in terms of aesthetic appearance of texture pattern because the difference in height of the reverse structure 4 was 51 mm or more and 80 mm or less, and thus the uneven pattern on the concrete surface was deep, resultantly making the texture pattern less noticeable.

The concrete decorating embossing material 1 of Example 13 was evaluated to be good (acceptable) in terms of aesthetic appearance of uneven pattern, but to be fair (acceptable) in terms of aesthetic appearance of texture pattern because the thickness of each cure retardant layer element3 was 1 µm or more and 4 µm or less, and thus the texture pattern on the concrete surface became shallow. The concrete decorating embossing material 1 of Example 14 was evaluated to be good (acceptable) in terms of aesthetic appearance of texture pattern, but to be fair (acceptable) in terms of aesthetic appearance of uneven pattern because the thickness of each cure retardant layer element 3 was 81 µm or more and 160 µm or less, and thus the texture pattern on the concrete surface became deep, resultantly making the uneven pattern less noticeable.

The concrete decorating embossing material 1 of Example 15 was evaluated to be fair (acceptable) in terms of aesthetic appearance of texture pattern because the thickness of each cure retardant layer element 3 was 50,000 µm (50 mm) or more and 80,000 µm (80 mm) or less, thus the texture pattern of the concrete surface became deep, and the retardant affected portions other than the textured portions, hindering clear appearance of the texture pattern on the concrete surface. Furthermore, evaluation in terms of aesthetic appearance of uneven pattern was also fair (acceptable) because the texture pattern on the concrete surface became deep, and thus the uneven pattern became less noticeable.

The concrete decorating embossing material 1 of Comparative Example 7 was evaluated to be good (acceptable) in terms of aesthetic appearance of uneven pattern, but to be poor (unacceptable) in terms of aesthetic appearance of texture pattern because the cure retardant layer elements 3 were not provided, and thus no texture pattern was formed via the aggregates exposed on the concrete surface. The concrete decorating embossing material 1 of Comparative Example 8 was evaluated to be good (acceptable) in terms of aesthetic appearance of uneven pattern but to be poor (unacceptable) in terms of aesthetic appearance of uneven pattern because the reverse structure 4 was not provided, and thus no uneven pattern was formed on the concrete surface.

Accordingly, it was confirmed that the concrete decorating embossing materials 1 of Examples 10 to 15 were superior to the concrete decorating embossing materials 1 of Comparative Examples 7 and 8 in terms of aesthetic appearance of both texture pattern via the aggregates exposed from the concrete and uneven pattern on the concrete surface.

### [Reference Signs List]

- 1: Concrete decorating embossing material
- 2: Substrate
- 2a: Surface of substrate
- 3: Cure retardant layer element
- 4: Reverse structure
- 4a: Concavity
- 4b: Convexity
- 10: Concrete decorating casting paper
- 11: Substrate sheet
- 11a: Surface
- 13: Cure retardant layer element
- 15: Uneven pattern
- 30: Precast concrete
- 31: Concavity
- 32: Discolored portion
- 111: Paper substrate
- 112: Polyolefin layer
- 131: First cure retardant layer element
- 132: Second cure retardant layer element

This application is a divisional application of European patent application no. 19 868 928.3 (the "parent application"), also published as EP 3 862 156. Based on the original claims of the parent application, the following items form part of the content of this divisional application as filed.

### [ITEMS]

Item 1. A concrete decorating casting paper characterized in that:
   the concrete decorating casting paper comprises:
   a substrate sheet, and
   cure retardant layer elements which are formed in portions of a first surface of the substrate sheet, and comprise a resin composition mixed with a concrete cure retardant; and
   the first surface of the substrate sheet has a wettability of 34 mN/m or more.
Item 2. The concrete decorating casting paper according to item 1, characterized in that the first surface of the substrate sheet has a wettability of 40 mN/m or more, or 44 mN/m or more, or 48 mN/m or more, or 54 mN/m or more.
Item 3. The concrete decorating casting paper according to item 1 or 2, characterized in that the first surface of the substrate sheet has an uneven pattern with an arithmetic mean roughness of 1 µm or more and 30 µm or less.
Item 4. The concrete decorating casting paper according to any one of items 1 to 3, characterized in that:
   the cure retardant layer elements include respective first cure retardant layer elements and respective second cure retardant layer elements laminated in this order on the first surface of the substrate sheet; and
   the second cure retardant layer elements each provide a larger cure retardation depth and occupy a smaller area than the first cure retardant layer elements.
Item 5. The concrete decorating casting paper according to any one of items 1 to 4, characterized in that the cure retardant layer elements comprise oxycarboxylic acid, diatomaceous earth, titanium oxide, and acrylic or rosin resin.
Item 6. The concrete decorating casting paper according to item 4, characterized in that:
   the cure retardant layer elements comprise oxycarboxylic acid, diatomaceous earth, titanium oxide, and acrylic or rosin resin; and
   a mass ratio of oxycarboxylic acid in the first cure retardant layer elements is lower than a mass ratio of oxycarboxylic acid in the second cure retardant layer elements.
Item 7. The concrete decorating casting paper according to any one of items 1 to 6, characterized in that the substrate sheet is a polyolefin resin film sheet, a polyester resin film sheet, or kraft paper with a polyolefin resin laminated on both sides.
Item 8. The concrete decorating casting paper according to item 7, characterized in that the polyolefin resin film sheet and the polyester resin film sheet both have a thickness of 100 µm or more and 250 µm or less.
Item 9. The concrete decorating casting paper according to any one of items 1 to 8, characterized in that:
   the substrate sheet includes a reverse structure which is a reverse of an uneven pattern to be formed on a concrete surface; and
   the cure retardant layer elements are formed in portions of the surface of the substrate sheet on which the reverse structure is formed.
Item 10. A concrete decorating embossing material characterized in that:
   the concrete decorating embossing material comprises
   a substrate including a reverse structure which is a reverse of an uneven pattern to be formed on a concrete surface, and
   cure retardant layer elements which are formed in portions of the surface of the substrate on which the reverse structure is formed, and comprise a resin composition mixed with a concrete cure retardant; and
   the concrete decorating embossing material includes a texture pattern of the cure retardant layer elements on the substrate.
Item 11. The concrete decorating embossing material according to item 10, characterized in that:
   the reverse structure includes concavities and convexities having a difference in height of 0.5 mm or more and 50 mm or less between a bottom of each concavity and a top of a convexity adjacent to the concavity; and
   the cure retardant layer elements each have a thickness of 5 µm or more and 80 µm or less.
Item 12. The concrete decorating embossing material according to item 11, characterized in that the cure retardant layer elements each have a thickness that is less than a difference in height between a bottom of each concavity configuring the reverse structure and a top of a convexity adj acent to the concavity.
Item 13. The concrete decorating embossing material according to any one of items 10 to 12, characterized in that the cure retardant layer elements comprise oxycarboxylic acid, diatomaceous earth, titanium oxide, and acrylic or rosin resin.
Item 14. The concrete decorating embossing material according to any one of items 10 to 13, characterized in that:
   the cure retardant layer elements include respective first cure retardant layer elements and respective second cure retardant layer elements laminated in this order on the surface of the substrate on which the reverse structure is formed; and
   the second cure retardant layer elements each provide a greater cure retardation depth and occupy a smaller area than the first cure retardant layer elements.

## Claims

1. A concrete decorating embossing material **characterized in that**:
the concrete decorating embossing material comprises
a substrate including a reverse structure which is a reverse of an uneven pattern to be formed on a concrete surface, and
cure retardant layer elements which are formed in portions of the surface of the substrate on which the reverse structure is formed, and comprise a resin composition mixed with a concrete cure retardant; and
the concrete decorating embossing material includes a texture pattern of the cure retardant layer elements on the substrate.

2. The concrete decorating embossing material according to claim 1, **characterized in that**:
the reverse structure includes concavities and convexities having a difference in height of 0.5 mm or more and 50 mm or less between a bottom of each concavity and a top of a convexity adjacent to the concavity; and
the cure retardant layer elements each have a thickness of 5 µm or more and 80 µm or less.

3. The concrete decorating embossing material according to claim 2, **characterized in that** the cure retardant layer elements each have a thickness that is less than a difference in height between a bottom of each concavity configuring the reverse structure and a top of a convexity adjacent to the concavity.

4. The concrete decorating embossing material according to any one of claims 1 to 3, **characterized in that** the cure retardant layer elements comprise oxycarboxylic acid, diatomaceous earth, titanium oxide, and acrylic or rosin resin.

5. The concrete decorating embossing material according to any one of claims 1 to 4, **characterized in that**:
the cure retardant layer elements include respective first cure retardant layer elements and respective second cure retardant layer elements laminated in this order on the surface of the substrate on which the reverse structure is formed; and
the second cure retardant layer elements each provide a greater cure retardation depth and occupy a smaller area than the first cure retardant layer elements.
